## Europäisches Patentamt
## European Patent Office
## Office européen des brevets

(11) Numéro de publication: **0 184 509**
**B1**

(12) **FASCICULE DE BREVET EUROPÉEN**

(45) Date de publication du fascicule du brevet:
**12.10.88**

(51) Int. Cl.⁴: **G 01 D 15/22**, G 01 D 9/24

(21) Numéro de dépôt: **85402367.8**

(22) Date de dépôt: **02.12.85**

(54) **Dispositif d'entraînement d'un organe actif tel qu'un stylet de tachygraphe entre une position de repos et deux positions de travail.**

(30) Priorité: **04.12.84 FR 8418456**

(43) Date de publication de la demande:
**11.06.86 Bulletin 86/24**

(45) Mention de la délivrance du brevet:
**12.10.88 Bulletin 88/41**

(84) Etats contractants désignés:
**DE GB IT SE**

(56) Documents cité:
**GB-A-692 716**
**GB-A-2 017 918**

(73) Titulaire: **JAEGER, 2, rue Baudin, F-92303 Levallois-Perret (FR)**

(72) Inventeur: **Boisseau, Marc, 6-8, rue du Chemin Vert, F-92110 Clichy La Garenne (FR)**

(74) Mandataire: **Martin, Jean- Jacques, Cabinet REGIMBEAU 26, Avenue Kléber, F-75116 Paris (FR)**

LIBER, STOCKHOLM 1988

## Description

La présente invention concerne un dispositif d'entraînement d'un organe actif entre une position de repos et deux positions de travail.

La présente invention s'applique plus particulièrement à l'entraînement d'un stylet de tachygraphe.

Plus précisément encore, le dispositif d'entraînement d'un organe actif conforme à la présente invention a pour but de commander le déplacement d'un organe actif entre une position de repos et deux positions de travail correspondant respectivement à une position de travail principale et à une position de travail auxiliaire comprise entre la position de repos et la position de travail principale, avec priorité pour cette dernière.

En d'autres termes, grâce au dispositif d'entraînement conforme à la présente invention, lorsque la position de travail principale et la position de travail auxiliaire de l'organe actif sont sollicitées simultanément, l'organe actif est déplacé en position de travail principale, considérée comme prioritaire.

On a déjà proposé différents dispositifs d'entraînement d'organes actifs remplissant la fonction précitée.

Néanmoins, les dispositifs jusqu' ici proposés pour entraîner un organe actif entre une position de repos et deux positions de travail, avec priorité donnée à l'une des deux positions de travail, s'avèrent à la fois complexes, coûteux et peu fiables.

Pour la plupart, ces dispositifs d'entraînement comportent des moyens logiques électroniques remplissant la fonction priorité précitée

Il en résulte que le coût des dispositifs d'entraînement précités actuellement disponibles, est fort élevé.

Un premier but de la présente invention est de fournir un dispositif d'entraînement d'un organe actif, tel qu'un stylet de tachygraphe, entre une position de repos, et deux positions de travail correspondant respectivement à une position de travail principale et à une position de travail auxiliaire comprise entre la position de repos et la position de travail principale, avec priorité pour cette dernière, qui soit à la fois de réalisation simple, robuste et économique.

Le problème ainsi posé est résolu selon la présente invention par un dispositif d'entraînement qui comprend:

- une embase,
- une pièce support de l'organe actif guidée à déplacement sur l'embase dans une direction prédéterminée et sollicitée élastiquement vers la position de repos,
- une biellette montée à translation parallèlement à la direction de déplacement de la pièce support, et qui vient en prise avec celle-ci par l'intermédiaire de moyens à butée autorisant un débattement relatif entre la pièce support et la biellette dans la direction de déplacement précitée,

- des moyens de guidage aptes à guider la biellette en translation dans la direction de déplacement sur une amplitude contrôlée,
- un verrou monté à rotation sur la pièce support autour d'un axe secondaire transversal à la direction de déplacement de celle-ci entre une position de blocage dans laquelle des moyens d'arrêt prévus sur le verrou et la biellette interdisent un déplacement relatif de ces derniers dans la direction de déplacement de la biellette, et une position de libération dans laquelle la pièce support peut se déplacer par rapport à la biellette sur une course de débattement déterminée par les moyens à butée,
- un premier organe d'actionnement apte à coopérer avec la biellette pour déplacer celle-ci en translation sur ladite amplitude contrôlée et déplacer la pièce support en position de travail auxiliaire et
- un second organe d'actionnement apte à coopérer avec le verrou pour, dans un premier temps, déplacer le verrou par pivotement de la position de blocage en position de libération, puis dans un second temps, déplacer la pièce support par rapport à la biellette sur la course de débattement déterminée par les moyens à butée pour porter la pièce support en position de travail principale.

Ainsi, selon l'invention, le dispositif d'entraînement de l'organe actif est réalisé entièrement mécaniquement, ce qui lui assure robustesse et fiabilité.

La priorité donnée à la position de travail principale est assurée par la coopération du second organe d'actionnement et du verrou. Cette disposition sera explicitée plus en détail par la suite. De préférence, la pièce support est formée d'un levier monté à pivotement sur l'embase autour d'un axe principal parallèle à l'axe secondaire de rotation du verrou.

En variante cependant, on peut envisager de guider la pièce support en translation sur l'embase.

Selon une caractéristique préférentielle de l'invention, les organes d'actionnement comprennent des poussoirs aptes à venir en prise respectivement avec la biellette et le verrou.

Selon un mode de réalisation préférentiel de la présente invention, les moyens à butée prévus sur la biellette et la pièce support comprennent un tourillon engagé dans une lumière oblongue s'étendant dans la direction de déplacement de la biellette.

De façon avantageuse, le tourillon s'étend transversalement à la direction de déplacement de la pièce support et est porté par la pièce support, tandis que la lumière oblongue est ménagée dans la biellette.

Dans un tel cas, il est en outre avantageux que le verrou soit monté à rotation sur la pièce support autour du tourillon précité.

Cette dernière caractéristique permet en particulier une réalisation simple et compacte du dispositif d'entraînement conforme à la présente invention.

Selon une caractéristique avantageuse de l'invention, les organes d'actionnement sont commandés en déplacement par des électro-aimants respectivement associés.

Les organes d'actionnement comprennent avantageusement des poussoirs qui peuvent être guidés à pivotement ou à translation sur l'embase.

Selon une autre caractéristique préférentielle de la présente invention, les moyens de guidage comprennent un téton engagé dans un évidement oblong.

De préférence, l'évidement oblong est prévu sur la biellette tandis que le téton est prévu sur l'embase.

Selon une autre caractéristique avantageuse de la présente invention, les moyens d'arrêt comprennent une saillie engagée dans une ouverture qui définit une surface d'appui transversale à la direction de déplacement de la biellette, ainsi qu'un canal orienté parallèlement à cette direction.

De façon avantageuse, un organe de rappel sollicite le verrou en position de blocage.

D'autres caractéristiques et avantages de la présente invention apparaîtront à la lecture de la description détaillée qui va suivre et en regard des dessins annexés, donnés à titre d'exemple non limitatif et sur lesquels:

- la figure 1 représente une vue en perspective d'une biellette utilisée dans un dispositif d'entraînement conforme à la présente invention,

- la figure 2 représente une vue en perspective d'un verrou utilisé dans un dispositif d'entraînement conforme à la présente invention,

les figures 3 et 4 représentent des vues de dessus respectivement de la biellette et du verrou précités,

- la figure 5 représente une vue schématique en perspective de l'embase utilisée dans un dispositif d'entraînement conforme à la présente invention,

- la figure 6 représente une vue schématique en perspective du dispositif d'entraînement conforme à la présente invention, en position de repos,

- la figure 7 représente une vue schématique en perspective du dispositif d'entraînement conforme à la présente invention, en position de travail auxiliaire,

- la figure 8 représente une vue schématique en perspective du dispositif d'entraînement conforme à la présente invention, en position de travail principale.

**Structure du dispositif**

D'une façon générale, le dispositif d'entraînement d'un organe actif conforme à la présente invention comprend une embase 100, un levier 200 qui supporte l'organe actif schématiquement référencé S, une biellette 300, un verrou 400 et deux poussoirs 500 et 600.

Selon le mode de réalisation représenté sur les figures, l'embase 100 comprend un plateau 110 généralement horizontal dont la surface supérieure est référencée 111. Le plateau 110 porte une console 150 dont la structure sera décrite plus en détail par la suite.

Par ailleurs, le plateau 110 porte sur sa surface supérieure un téton 112 et deux tiges 113 et 114.

Comme on le comprendra à la lecture de la description détaillée qui va suivre, le téton 112 constitue l'un des éléments des moyens de guidage aptes à guider la biellette 300 en translation sur une amplitude contrôlée.

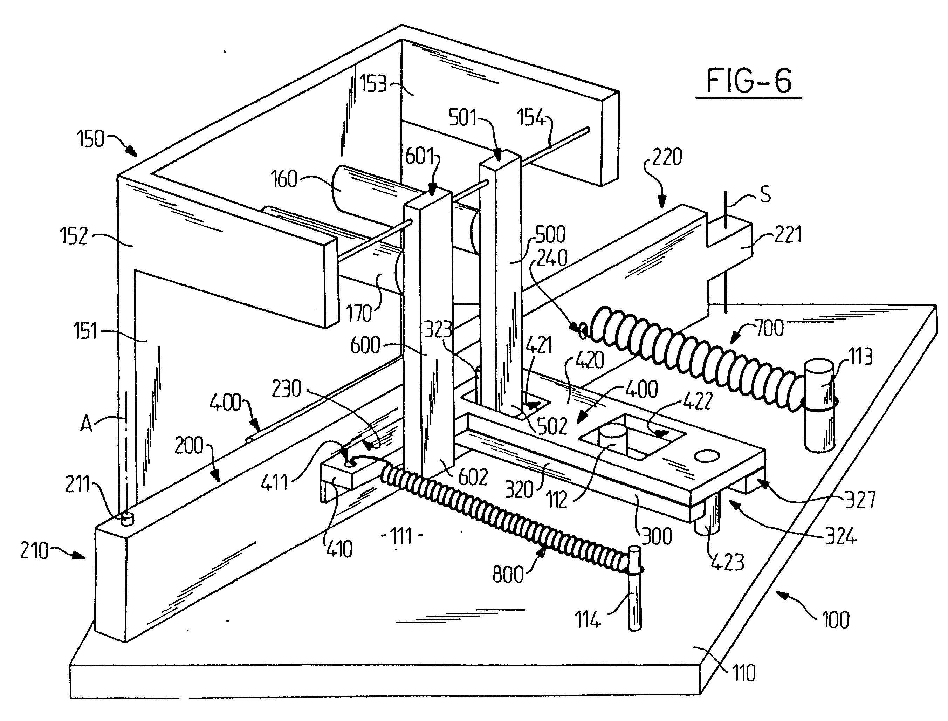

Les deux tiges 113 et 114 sont destinées à recevoir, comme représenté sur les figures 6 à 8, l'une des extrémités de ressorts respectifs 700 et 800 assurant l'un le rappel du levier 200 en position de repos, l'autre le rappel du verrou 400 en position de blocage.

De préférence, comme cela est représenté sur les figures, le téton 112 et les tiges 113, 114 sont chacun cylindriques et s'étendent en saillie et perpendiculairement sur la surface supérieure 111 du plateau 110.

Le levier 200 est formé d'un barreau sensiblement rectiligne qui s'étend horizontalement et repose sur la surface supérieure 111 du plateau 110. Le levier 200 présente une section droite (considérée transversalement à sa direction d'élongation) généralement rectangulaire. Plus précisément, de préférence, comme représenté sur les figures, la plus grande dimension de la section droite du levier s'étend perpendiculairement à la surface 111 du plateau 110 de l'embase, tandis que la petite dimension de la section droite du levier 200 s'étend parallèlement à la surface supérieure 111.

Le levier 200 est monté à pivotement sur l'embase 100 par une première extrémité 210 autour d'un axe principal référencé A. Cet axe A s'étend perpendiculairement à la direction d'élongation du levier 200 et parallèlement à la plus grande dimension de la section droite transversale du levier 200. De ce fait, l'axe principal A de pivotement de levier 200 s'étend perpendiculairement à la surface supérieure 111 de l'embase. Sur les figures, l'axe principal A de pivotement du levier 200 est matérialisé par un arbre référencé 211 traversant le levier 200 et engagé dans le plateau 110 de l'embase 100.

A sa seconde extrémité schématiquement référencée 220, le levier 200 porte l'organe actif S, tel qu'un stylet de tachygraphe.

Un tel organe actif, classique en lui-même, ne sera pas décrit en détail par la suite. Sur les figures, le stylet S est représenté schématiquement sous forme d'une pointe s'étendant parallèlement à l'axe A, et traversant un doigt 221 solidaire du corps du levier 200.

Dans la pratique, le stylet S est de préférence associé à un organe de déplacement et à des moyens de sollicitation élastique aptes à contrôler la mise en contact de la pointe du stylet S contre un disque de tachygraphe. Les moyens d'entraînement et de sollicitation élastique du stylet S, classiques en eux-mêmes, n'ont pas été représentés sur les figures, afin de simplifier l'illustration.

En partie médiane, le levier 200 est de plus muni d'une fente longitudinale schématiquement référencée 230. Cette fente 230 s'étend parallèlement à la direction d'élongation du barreau 200. Cette fente 230 traverse le levier 200 perpendiculairement aux grandes faces longitudinales de celui-ci, c'est-à-dire parallèlement à la surface supérieure 111 de l'embase 110. Cette fente 230, comme illustrée sur les figures 6, 7 et 8 est destinée à recevoir une portion de la biellette 300 et du verrou 400 superposés.

En outre, le levier 200 est muni entre la fente longitudinale 230 et la seconde extrémité 220 précitée d'un orifice 240 traversant dans lequel est engagée la seconde extrémité du ressort de sollicitation 700 précité.

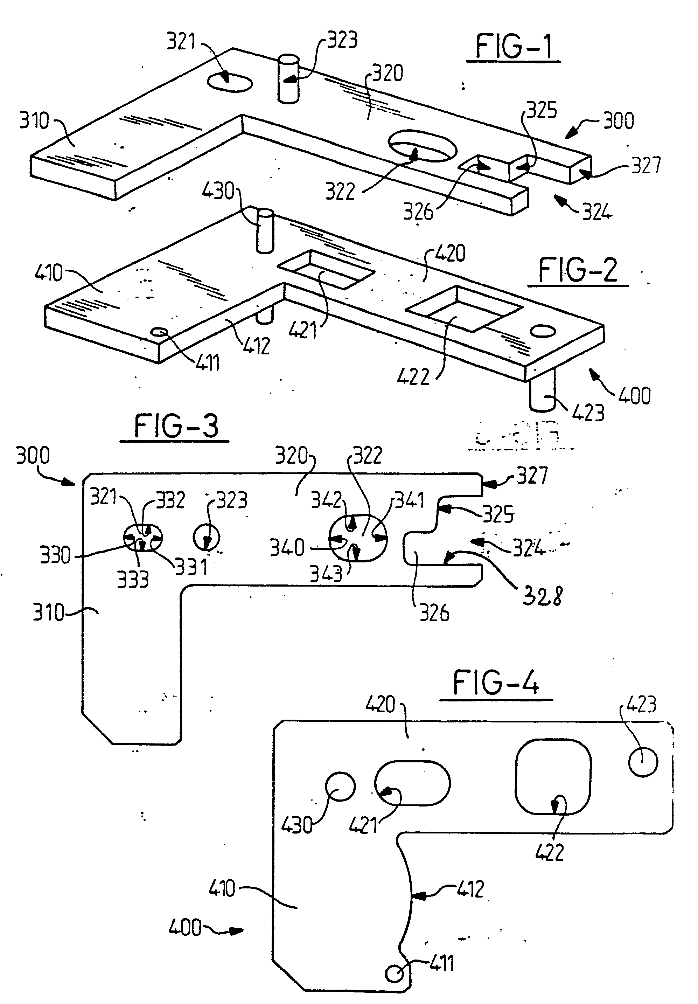

Comme cela est illustré en particulier sur les figures 1 et 3, la biellette 300 est formée d'une plaque en forme de L qui, à l'utilisation, s'étend généralement parallèlement au plateau 110 de l'embase. Les deux ailes de la biellette 300 sont référencées 310 et 320 respectivement sur les figures.

Lors de l'assemblage du dispositif d'entraînement, l'aile 310 de la biellette 300 est engagée dans la fente longitudinale 230, tandis que l'aile 320 de la biellette 300 s'étend transversalement au levier 200.

Dans l'angle de la biellette 300 adjacent aux ailes 310 et 320, est ménagée une lumière oblongue 321 reliant les faces principales horizontales de la biellette 300 et s'étendant généralement parallèlement à la direction d'élongation de la seconde aile 320. Lors de l'assemblage, la lumière 321 reçoit un tourillon 430 par l'intermédiaire duquel le verrou 400 est articulé sur le levier 200.

La lumière 321 est de préférence formée de deux calottes hémicylindriques 330, 331 complémentaires de la surface extérieure du tourillon 430, reliées par deux surfaces planes, 332, 333 parallèles entre elles et parallèles à la direction d'élongation de la seconde aile 320 de la biellette 300. L'homme de l'art comprendra aisément que la longueur des faces planes précitées de la lumière 321 détermine l'amplitude du débattement relatif autorisé entre le levier 200 et la biellette 300.

La seconde aile 320 de la biellette 300 est munie d'un évidement oblong 322 reliant également les faces principales horizontales de la biellette 300.

Là encore, cet évidement oblong 322 s'étend sensiblement parallèlement à la direction d'élongation de la seconde aile 320 de la biellette 300.

Cet évidement 322 reçoit le téton 112 solidaire de l'embase 100. L'évidement 322, de préférence, est délimité par deux calottes hémicylindriques 340, 341, complémentaires de l'enveloppe extérieure du téton 112, reliées par deux surfaces planes 342, 343 parallèles entre elles et parallèles à la direction d'élongation de la seconde aile 320 de la biellette 300.

La longueur des faces planes 342 et 343 définit l'amplitude du déplacement relatif autorisé entre la biellette 300 et l'embase 100.

La seconde aile 320 de la biellette 300 est de plus munie entre la lumière 321 et l'évidement 322 précités, d'une tige cylindrique 323 en saillie perpendiculairement sur sa surface supérieure.

Enfin, comme cela apparaît en particulier sur les figures 1 et 3, la seconde aile 320 de la biellette 300 est munie d'une ouverture 324, traversant l'épaisseur de la biellette 300 considérée entre ses deux faces principales horizontales et qui débouche sur le chant extrême 327 de la seconde aile 320.

L'ouverture 324 comprend d'une part un canal 326 s'étendant parallèlement à la direction d'élongation de la seconde aile 320, sensiblement dans l'alignement de la lumière 321 et de l'évidement 322, et d'autre part un décrochement qui définit une surface d'appui 325 qui s'étend transversalement à la direction d'élongation de l'aile 320, et donc sensiblement transversalement à la direction de déplacement de la biellette 300 par rapport à l'embase 100. La surface d'appui 325 est dirigée vers le chant 327. Le cas échéant, la surface d'appui 325 peut être légèrement inclinée vers le canal 326.

Comme cela sera précisé par la suite, l'ouverture 324 est destinée à coopérer avec un organe en saillie 423 prévu sur la surface inférieure du verrou 400.

Le déplacement de l'organe en saillie 423 dans l'ouverture 324 en éloignement de la surface transversale 325, en regard du canal 326, est limité de préférence par la surface latérale du canal référencée 328 sur la figure 3, qui s'étend transversalement à la surface 325 précitée, afin de garantir la pénétration de la saillie 423 dans le canal 326. Une telle limitation du pivotement relatif entre la biellette 300 et le verrou 400 pourra être obtenue par tout autre moyen fonctionnellement équivalent, par exemple grâce au téton 112 pénétrant dans une ouverture 422 (qui sera défini plus en détail par la suite) ménagée dans le verrou 400.

Le verrou 400, qui, à l'utilisation, est superposé à la biellette 300 et s'étend également parallèlement au plateau 110 est formé d'une plaque en forme générale de "L". Les deux ailes du verrou 400 sont référencées 410, 420 respectivement sur les figures.

La première aile 410 du verrou 400, engagée dans la fente longitudinale 230 du levier 200 est munie d'un orifice 411 traversant orienté perpendiculairement à ses faces principales, et destiné à recevoir la seconde extrémité du ressort de sollicitation 800 précité.

Le verrou 400 est muni dans l'angle adjacent aux ailes 410 et 420 d'un tourillon 430 en saillie de part et d'autre, engagé dans la lumière 321 de la biellette 300 et par l'intermédiaire duquel le verrou 400 est articulé sur le levier 200. La seconde aile 420 du verrou 400 est munie à proximité de son extrémité libre et sur sa surface inférieure d'une saillie cylindrique 423 coopérant, selon une disposition qui sera décrite plus en détail par la suite, avec l'ouverture 324 de la biellette 300.

La seconde aile 420 du verrou 400 est munie de plus d'une première ouverture 421 traversante, de contour généralement rectangulaire, dans laquelle est engagée la tige 323 précitée de la biellette 300. La première ouverture 421 est conformée pour autoriser un déplacement relatif de la biellette 300 et du verrou 400 d'une part et la mise en contact du premier poussoir 500 et de la tige de commande 323 d'autre part, comme représenté sur les figures 6 à 8.

Enfin, la seconde aile 420 du verrou 400 est munie en outre d'une seconde ouverture 422 traversante, de contour généralement rectangulaire, dans laquelle est engagé le téton 112. Cette seconde ouverture 422, comme représenté sur les figures 6 à 8, est conformée pour autoriser un déplacement relatif du verrou 400 et du téton 112.

On notera par ailleurs que la distance séparant le tourillon 430 de la saillie 423 sur le verrou est égale à la distance séparant la surface d'appui 325 de la calotte hémicylindrique 331 sur la biellette.

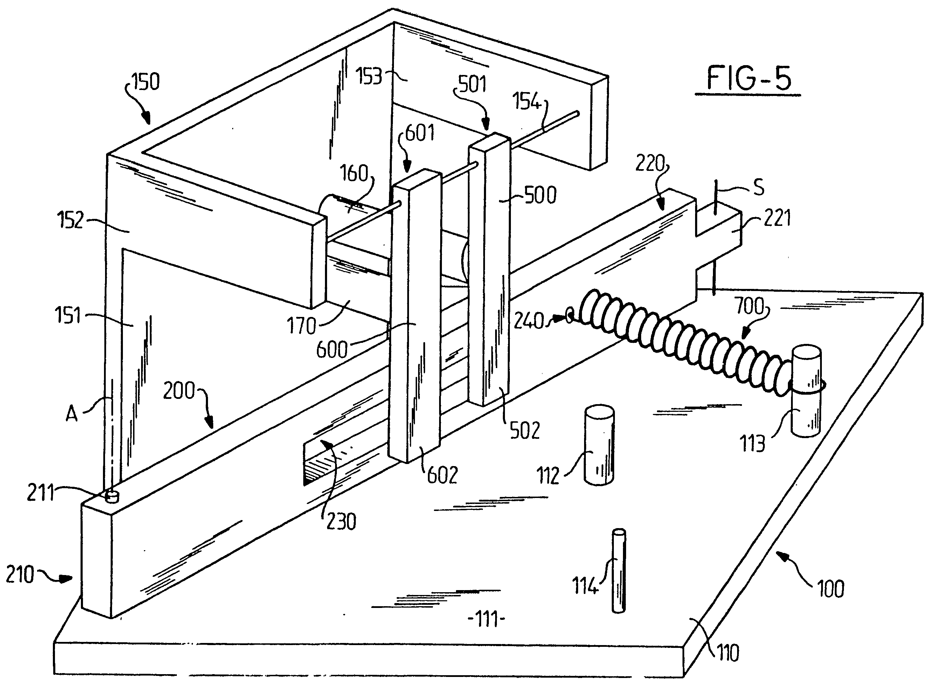

Comme illustré sur les figures 5 à 8, le dispositif d'entraînement conforme à la présente invention comprend en outre deux poussoirs 500 et 600 destinés à entraîner respectivement la biellette 300 et le verrou 400.

Selon la représentation donnée sur les figures annexées, les poussoirs 500, 600 sont formés de barreaux généralement rectilignes, s'étendant verticalement au repos, et montés à pivotement, par leur extrémité supérieure 501, 601 autour d'un axe horizontal 154 porté par la console 150.

Plus précisément, la console 150 est formée d'une plaque 151 verticale portée par le plateau 110 et munie de deux ailes 152, 153 parallèles sur lesquelles est immobilisé l'axe 154 précité.

L'extrémité inférieure 502 du poussoir 500 est engagée dans l'ouverture 421 du verrou 400 et peut venir en appui contre la tige de commande 323 de la biellette 300, du côté de l'ouverture 324.

L'extrémité inférieure 602 du second poussoir 600 repose contre le chant 412 de la première aile 410 du verrou 400, dirigé vers la seconde aile 420, et situé entre l'orifice traversant 411 et l'ouverture 421 précitée. De préférence, le chant 412 n'est pas plan mais cylindrique, comme représenté sur la figure 4.

La console 150 est adaptée pour supporter l'axe 154 d'articulation des poussoirs 500 et 600 de telle sorte que l'extrémité inférieure 502 et 602 de ces derniers soit placée du même côté du levier 200 que le téton 112 et les tiges support 113, 114.

La plaque 151 de la console 150 supporte par ailleurs deux électro-aimants 160, 170 disposés respectivement en regard du premier poussoir 500 et du second poussoir 600 et adaptés, lorsqu'ils sont alimentés, pour induire un pivotement respectif des poussoirs 500 et 600 autour de l'axe horizontal 154, tendant à rapprocher l'extrémité inférieure 502, 602 des poussoirs, du levier 200.

Bien entendu, la structure des poussoirs 500, 600, de la console 150 et des électro-aimants 160, 170 peut être l'objet de nombreuses variantes de réalisation. A titre d'exemple, on peut envisager de guider les poussoirs 500 et 600 à translation sur l'embase 150, et non point à pivotement comme représenté sur les figures.

### Fonctionnement du dispositif

On va maintenant décrire le fonctionnement du dispositif d'entraînement conforme à la présente invention en regard des figures 6 à 8.

### Position de repos - figure 6 -

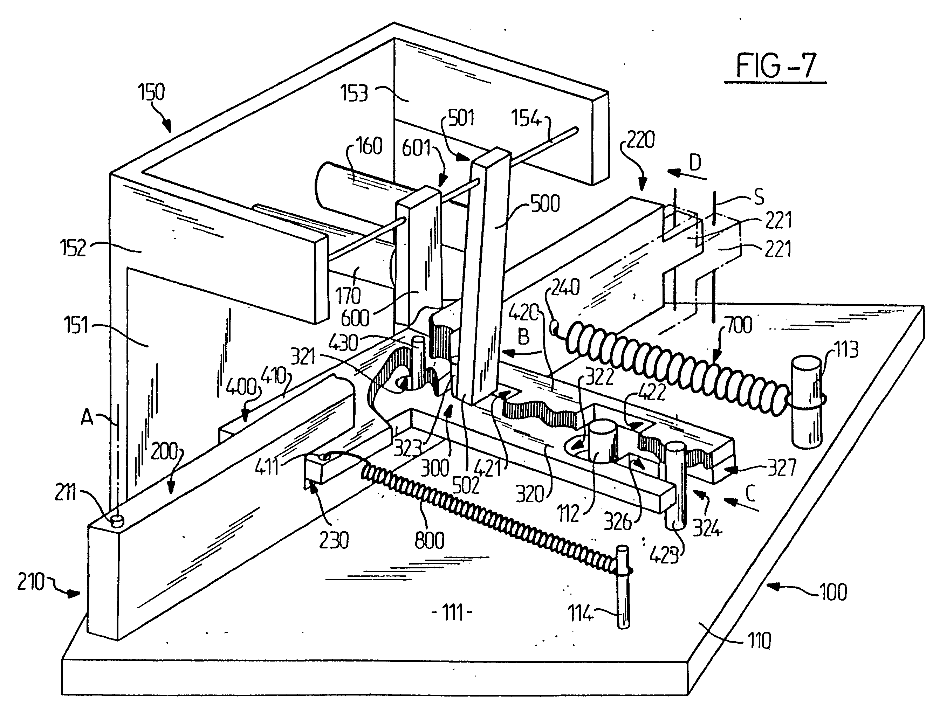

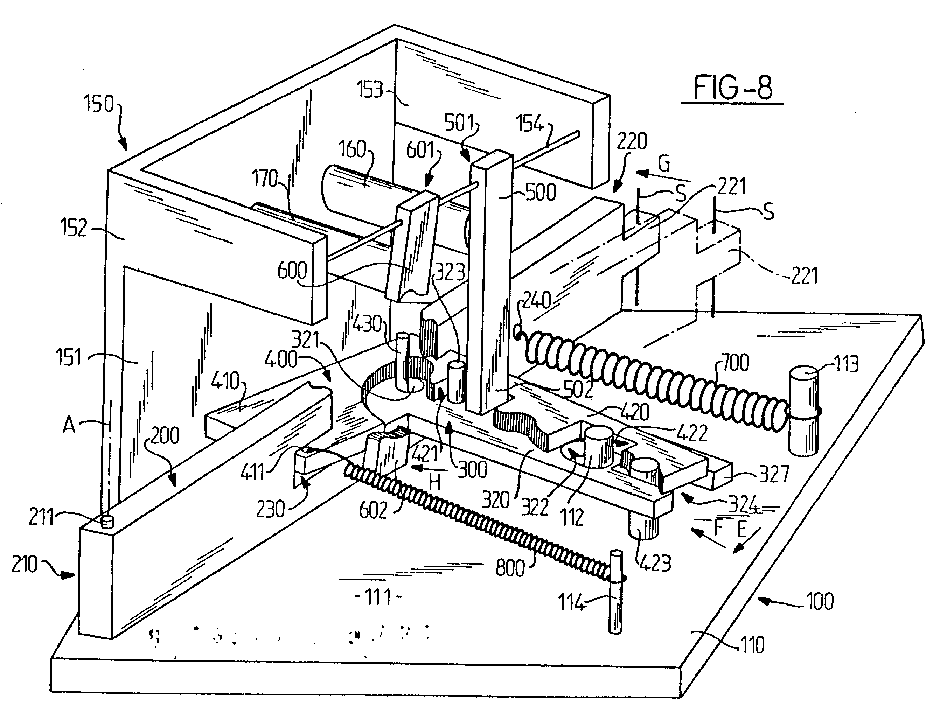

On remarquera que sur les figures 7 et 8, le levier 200, le verrou 400 et le second poussoir 600 n'ont été que partiellement représentés afin de faciliter la compréhension de la coopération des différents éléments composant le dispositif d'entraînement.

Par ailleurs, sur les figures 7 et 8, on a représenté schématiquement en traits interrompus la position occupée par la seconde extrémité 220 du levier 200 en position de repos.

Dans la position de repos, illustrée sur la figure 6, les deux électro-aimants 160 et 170 sont non alimentés.

Les ailes 310 et 410 de la biellette 300 et du verrou 400 sont engagées dans la fente longitudinale 230 du levier 200. Le verrou 400 est articulé par l'intermédiaire du tourillon 430 s'étendant parallèlement à l'axe A, sur le levier 200. Les extrémités du ressort 800 sont engagées respectivement dans l'orifice 411 du verrou 400 et sur la tige support 114 solidaire de l'embase 100. Ainsi, le verrou 400 est sollicité par le ressort 800 vers une position de blocage dans laquelle la saillie 423 engagée dans l'ouverture 324 de la biellette 300 est sollicitée en éloignement du canal 326 et repose contre la surface d'appui 325.

Le tourillon 430 repose alors contre la calotte hémicylindrique 331 de la biellette 300.

Par ailleurs, les extrémités du second ressort 700 sont engagées respectivement sur la tige support 113 solidaire de l'embase 100 et dans l'orifice 240 du levier 200. Le second ressort 700 sollicite le levier 200 en rapprochement de la tige support 113. Ainsi, par l'intermédiaire du tourillon 430 qui repose contre la calotte hémicylindrique 331 de la biellette 300, le ressort 700 sollicite un déplacement de la biellette 300 en éloignement de la console 150 jusqu'à mise en contact du téton 112 solidaire de l'embase 100 et de la calotte hémicylindrique 340 de l'évidement 322 ménagé dans la biellette 300.

La mise en contact du téton 112 et de la calotte hémicylindrique 340 de l'évidement 322 limite le déplacement du levier 200 en rapprochement de la tige support 113 et définit la position de repos du levier support.

Comme précédemment évoqué, l'extrémité inférieure 502 du premier poussoir 500, engagée dans l'ouverture 421 du verrou 400 repose contre la tige de commande 323 de la biellette 300, tandis que l'extrémité inférieure 602 du second poussoir 600 repose contre le chant 412 du verrou 400.

### Position de travail auxiliaire - figure 7 -

L'alimentation du premier électro-aimant 160 induit le pivotement du premier poussoir 500 autour de l'axe 154, et tend à rapprocher l'extrémité inférieure 502 du premier poussoir 500 du levier 200, comme illustré par la flèche référencée B sur la figure 7.

L'extrémité inférieure 502 du poussoir 500 reposant contre la tige de commande 323 de la biellette 300, le pivotement du poussoir 500 induit en parallèle un déplacement de la biellette 300 et donc du levier 200 qui repose par l'intermédiaire du tourillon 430 contre la calotte hémicylindrique de la lumière 321 jusqu'à ce que la calotte hémicylindrique 341 de l'évidement 322 de la biellette 300 repose contre le téton 112.

Le levier 200 est alors porté dans la position de travail auxiliaire.

Sur la figure 7, la translation de la biellette 300, et le pivotement du levier 200, lors du passage de la position de repos à la position de travail auxiliaire sont illustrés par les flèches référencées respectivement C et D.

Le ressort 800 sollicite constamment la saillie 423 du verrou 400 en éloignement du canal 326, en appui contre la surface transversale 325. Ainsi, le verrou 400 accompagne la biellette 300 lors du déplacement du levier 200 de la position de repos (figure 6) à la position de travail auxiliaire (figure 7). Par ailleurs, le verrou 400 articulé sur le levier 200 par l'intermédiaire du tourillon 430 interdit un déplacement du levier 200 au-delà de la position de travail auxiliaire puisque d'une part la surface hémicylindrique 341 de la biellette 300 repose contre le téton 112 solidaire de l'embase et d'autre part la saillie 423 solidaire du verrou 400 repose contre la surface d'appui transversale 325 de la biellette 300.

### Position de travail principale - figure 8 -

Par contre, l'excitation du second électro-aimant 170 induit le déplacement du levier 200 en position de travail principale telle que représentée sur la figure 8.

Pour ce faire, comme cela apparaît à l'examen de la figure 8, la rotation du second poussoir 600 autour de l'axe 154, induite par l'excitation du second électro-aimant 170, provoque dans un premier temps un pivotement du verrou 400 autour du tourillon 430, comme illustré par la flèche référencée E sur la figure 8, pour déplacer le verrou 400 de la position de blocage (figures 6 et 7) en position de libération, dans laquelle la saillie 423 du verrou 400 est disposée en regard du canal 326 de la biellette 300 (le pivotement du verrou 400 au-delà de cette position de libération étant limité par l'appui de l'organe 423 contre la surface 328 ou tout moyen équivalent), puis dans un second temps, comme illustré par la flèche référencée F sur la figure 8, déplace la saillie 423 dans le canal 326 et parallèlement le tourillon 430 dans la lumière 321 pour déplacer le levier 200 en position de travail principale telle qu'illustrée sur la figure 8.

Sur cette figure 8, le déplacement du levier 200 de la position de repos à la position de travail principale est illustré schématiquement par la flèche référencée G.

Par ailleurs, sur la figure 8, le pivotement du second poussoir 600 induit par l'excitation du second électro-aimant 170 est illustré par la flèche référencée H.

Dans la position de travail principale du levier 200, telle qu'illustrée sur la figure 8, la biellette repose par l'intermédiaire de la surface hémicylindrique 341 contre le téton 112. En outre, comme précédemment évoqué, la saillie 423 du verrou 400 est engagée dans le canal 326 de la biellette 300 et le tourillon 430 repose contre la surface hémicylindrique 330 de la biellette 300 pour limiter le déplacement du levier 200.

L'homme de l'art comprendra aisément que le passage du levier 200 en position de travail principale telle qu'illustrée sur la figure 8, par excitation du second électro-aimant 170 peut être obtenu aussi bien à partir de la position de repos illustrée sur la figure 6 qu'à partir de la position de travail auxiliaire représentée sur la figure 7, ce qui permet d'assurer la priorité pour la position de travail principale.

Les ressorts 700 et 800 assurent bien entendu le rappel du levier 200 en position de repos et du verrou 400 en position de blocage, à la fin de l'alimentation des électro-aimants 160 et 170. Néanmoins, l'homme de l'art comprendra aisément que, grâce à la structure précédemment décrite, lorsque à partir de la position de travail principale obtenue par alimentation de l'électro-aimant 170, l'alimentation de ce dernier est coupée mais l'alimentation de l'électro-aimant 160 est maintenue (ou réalisée en synchronisme avec la coupure de l'alimentation de l'électro-aimant 170), le levier 200 est rappelé en position de travail auxiliaire et le verrou 400 est rappelé en position de blocage.

De préférence, le tourillon 430, le téton 112, la lumière 321 et l'évidement 322 sont dimensionnés de telle sorte que le débattement du téton 112

dans l'évidement 322, parallèlement à la direction d'élongation de l'aile 320 de la biellette 300 soit d'une amplitude sensiblement identique au débattement du tourillon 430 dans la lumière 321. Ainsi, la position de travail auxiliaire de l'organe actif S est située à mi-chemin entre la position de repos et la position de travail principale.

Bien entendu, la présente invention n'est aucunement limitée au mode de réalisation particulier qui vient d'être décrit mais s'étend à toute variante conforme à son esprit.

Ainsi, par exemple, la tige de commande 323 de la biellette 300 peut être supprimée et remplacée par un alésage dans lequel est engagé l'extrémité inférieure 502 du premier poussoir 500.

De façon similaire, le téton 112 solidaire de l'embase 100 peut être supprimé et remplacé par une ouverture oblongue dans laquelle est engagé un téton solidaire de la biellette 300.

Selon une autre variante, l'ouverture 324 ménagée sur la biellette 300 et la saillie 423 réalisée sur le verrou 400 pourraient être remplacées par des moyens équivalents comprenant une saillie solidaire de la biellette coopérant avec une ouverture ménagée dans le verrou 400 et définissant une surface d'appui transversale à la direction de déplacement de la biellette ainsi qu'un canal orienté parallèlement à cette direction. Dans un tel cas, l'orientation de la surface d'appui et du canal devrait être inversée par rapport à la disposition illustrée sur les figures, c'est-à-dire que la surface d'appui devrait être dirigée vers le tourillon 430 et le canal en éloignement de celui-ci.

Selon encore une autre variante de réalisation, on peut envisager de remplacer le tourillon 430 engagé dans la lumière 321 de la biellette 300 et par l'intermédiaire duquel le verrou 400 est articulé sur le levier 200, par un axe solidaire de la biellette 300, engagée dans une ouverture oblongue ménagée dans le levier 200, le verrou 400 étant articulé sur le levier 200 par l'intermédiaire d'un tourillon auxiliaire parallèle à l'axe précité.

Par ailleurs, la pièce support portant l'organe actif S, formée d'un levier pivotant selon le mode de réalisation particulier qui vient d'être décrit, pourra être remplacée par une pièce support guidée à translation sur l'embase, parallèlement à la direction de translation de la biellette, comme précédemment évoqué.

**Revendications**

1. Dispositif d'entraînement d'un organe actif (S), tel qu'un stylet de tachygraphe, entre une position de repos et deux positions de travail correspondant respectivement à une position de travail principale et à une position de travail auxiliaire comprise entre la position de repos et la position de travail principale, avec priorité pour cette dernière,

caractérisé par le fait qu'il comprend:
- une embase (100),
- une pièce (200) support de l'organe actif (S) guidée à déplacement sur l'embase dans une direction prédéterminée, et sollicitée élastiquement (700) vers la position de repos,
- une biellette (300) montée à translation parallèlement à la direction de déplacement de la pièce support (200) et qui vient en prise avec celle-ci par l'intermédiaire de moyens à butée (321, 430) autorisant un débattement relatif entre la pièce support et la biellette dans la direction de déplacement précitée,
- des moyens de guidage(322, 112 ) aptes à guider la biellette (300) en translation dans la direction de déplacement sur une amplitude contrôlée,
- un verrou (400) monté à rotation sur la pièce support (200), autour d'un axe secondaire (430), transversal à la direction de déplacement de celle-ci, entre une position de blocage dans laquelle des moyens d'arrêt (325, 423) prévus sur le verrou et la biellette interdisent un déplacement relatif de ces derniers dans la direction de déplacement de la biellette, et une position de libération dans laquelle la pièce support (200) peut se déplacer par rapport à la biellette (300), sur une course de débattement déterminée par les moyens à butée (430, 321),
- un premier organe d'actionnement (500) apte à coopérer avec la biellette (300) pour déplacer celle-ci en translation sur ladite amplitude contrôlée et déplacer la pièce support (200) en position de travail auxiliaire,
et
un second organe d'actionnement (600) apte à coopérer avec le verrou (400) pour, dans un premier temps, déplacer le verrou (400) par pivotement de la position de blocage en position de libération, puis dans un second temps, déplacer la pièce support (200) par rapport à la biellette (300) sur la course de débattement déterminée par les moyens à butée (321, 430) pour porter la pièce support (200) en position de travail principale.

2. Dispositif d'entraînement selon la revendication 1, caractérisé par le fait que la pièce support (200) est un levier monté à pivotement sur l'embase autour d'un axe principal (A) parallèle à l'axe secondaire (430) de rotation du verrou.

3. Dispositif d'entraînement selon la revendication 1, caractérisé par le fait que la pièce support (200) est guidée à translation sur l'embase.

4. Dispositif d'entraînement selon l'une des revendications 1 à 3, caractérisé par le fait que les organes d'actionnement (500, 600) comprennent des poussoirs aptes à venir en prise respectivement avec la biellette (300) et le verrou (400).

5. Dispositif d'entraînement selon l'une des revendications 1 à 4, caractérisé par le fait que les moyens à butée (321, 430) prévus pour autoriser un débattement relatif entre la biellette

(300) et la pièce support (200) comprennent un tourillon (430) engagé dans une lumière oblongue (321) s'étendant dans la direction de déplacement de la biellette.

6. Dispositif d'entraînement selon la revendication 5, caractérisé par le fait que le tourillon (430) s'étend transversalement à la direction de déplacement de la pièce support (200) et est porté par celle-ci (200) tandis que la lumière oblongue (321) est ménagée dans la biellette (300).

7. Dispositif d'entraînement selon l'une des revendications 5 ou 6, caractérisé par le fait que le verrou (400) est monté à rotation sur la pièce support (200) autour du tourillon (430).

8. Dispositif d'entraînement selon l'une des revendications 1 à 7, caractérisé en ce que les organes d'actionnement (500, 600) sont commandés en déplacement par des électro-aimants (160, 170) respectivement associés.

9. Dispositif d'entraînement selon la revendication 8, caractérisé en ce que les organes d'actionnement sont des poussoirs (500, 600) guidés à pivotement sur l'embase (100).

10. Dispositif d'entraînement selon la revendication 8, caractérisé en ce que les organes d'actionnement sont des poussoirs (500, 600) guidés à translation sur l'embase (100).

11. Dispositif d'entraînement selon l'une des revendications 1 à 10, caractérisé en ce que les moyens de guidage comprennent un téton (112) engagé dans un évidement oblong (322).

12. Dispositif d'entraînement selon la revendication 11, caractérisé en ce que l'évidement oblong (322) est prévu sur la biellette (300) tandis que le téton (112) est prévu sur l'embase (100).

13. Dispositif d'entraînement selon l'une des revendications 1 à 12, caractérisé en ce que les moyens d'arrêt comprennent une saillie (423) engagée dans une ouverture (324) qui définit une surface d'appui (325) transversale à la direction de déplacement de la biellette ainsi qu'un canal (326) orienté parallèlement à cette direction.

14. Dispositif d'entraînement selon l'une des revendications 1 à 13, caractérisé par le fait que les moyens à butée comprennent un tourillon (430) s'étendant transversalement à la direction de déplacement de la pièce support (200), porté par celle-ci et autour duquel est monté à rotation le verrou (400), et une lumière oblongue (321) s'étendant dans la biellette (300) dans la direction de déplacement de celle-ci, tandis que les moyens de guidage comprennent un téton (112) engagé dans un évidement oblong (322), et par le fait que l'amplitude de débattement du tourillon (430) dans la lumière oblongue (321), dans la direction de déplacement de la biellette, est sensiblement égale à l'amplitude de débattement du téton (112) dans l'évidement (322), dans la même direction.

15. Dispositif d'entraînement selon l'une des revendications 1 à 14, caractérisé par le fait qu'il comprend un organe de rappel (800) sollicitant le verrou (400) dans sa position de blocage.

**Patentansprüche**

1. Anordnung zum Antreiben eines aktiven Elementes (S), wie z. B. eines Tachigraphenstichels, zwischen einer Ruheposition und zwei Arbeitspositionen, welche jeweils einer Hauptarbeitsposition bzw. einer zwischen der Ruheposition und der Hauptarbeitsposition liegenden Hilfsarbeitsposition entsprechen, mit Priorität für die letztere,
dadurch gekennzeichnet, daß die Anordnung aufweist:
- eine Grundplatte (100),
- ein Tragelement (200) für das aktive Element (S), welches auf der Grundplatte in einer vorgegebenen Richtung verstellbar geführt und in Richtung der Ruheposition elastisch vorgespannt ist,
- einem Schwingarm (300), welcher für eine Translationsbewegung parallel zur Verstellrichtung des Tragelementes (200) angebracht ist und über Anschlagelemente (321, 430), welche eine relative Durchfederung zwischen dem Tragelement und dem Schwingarm in der Richtung der vorerwähnten Verstellung gestatten, in Eingriff stehen,
- Führungseinrichtungen (322, 112), welche geeignet sind, den Schwingarm (300) bei der Translationsbewegung in der Verstellrichtung auf einer kontrollierten Amplitude zu führen,
- einen Riegel (400), der auf dem Tragelement (200) drehbeweglich um eine sekundäre, quer zu dessen Verstellrichtung verlaufende Achse (430) angebracht ist und zwischen einer Sperrposition, in welcher an dem Riegel und dem Schwingarm vorgesehene Sperrorgane (325, 423) eine Relativverstellung der letzteren in der Verstellrichtung des Schwingarms verhindern, und einer Freigabeposition, in welcher das Tragelement (200) sich bezüglich des Schwingarms auf einem durch die Anschlagelemente (430, 321) begrenzten Durchfederungsweg bewegen kann,
- ein erstes Betätigungsorgan (500), welches geeignet ist, mit dem Schwingarm (300) zusammenzuwirken, um diesen translatorisch auf der besagten kontrollierten Amplitude zu bewegen und das Tragelement (200) in die Hilfsarbeitsposition zu verstellen, und
- ein zweites Betätigungsorgan (600), welches geeignet ist, mit dem Riegel (400) zusammenzuwirken, um zu einem ersten Zeitpunkt den Riegel (400) durch Drehung von der Sperrposition in die Freigabeposition zu verstellen, dann zu einem zweiten Zeitpunkt das Tragelement (200) bezüglich des Schwingarmes (300) auf dem durch die Anschlagelemente (321, 430) begrenzten Durchfederungsweg zu verstellen, um das Tragelement (200) in die Hauptarbeitsposition zu bringen.

2. Antriebsanordnung nach Anspruch 1, dadurch gekennzeichnet, daß das Tragelement (200) ein Hebel ist, der auf der Grundplatte um eine primäre, zu der sekundären Rotationsachse (430) des Riegels parallele Achse (A) drehbar befestigt ist.

3. Antriebsanordnung nach Anspruch 1, dadurch gekennzeichnet, daß das Tragelement (200) auf der Grundplatte translatorisch bewegbar geführt ist.

4. Antriebsanordnung nach einem der Ansprüche 1 bis 3, dadurch gekennzeichnet, daß die Betätigungsorgane (500, 600) Stößel aufweisen, welche geeignet sind, mit dem Schwingarm (300) bzw. dem Riegel (400) in Eingriff zu gelangen.

5. Antriebsanordnung nach einem der Ansprüche 1 bis 4, dadurch gekennzeichnet, daß die Anschlagelemente (321, 430), welche vorgesehen sind, um eine relative Durchfederung zwischen dem Schwingarm (300) und dem Tragelement (200) zu ermöglichen, einen Zapfen (430) aufweisen, der in einem sich in der Verstellrichtung des Schwingarms erstreckenden Langloch (321) in Eingriff ist.

6. Antriebsanordnung nach Anspruch 5, dadurch gekennzeichnet, daß der Zapfen (430) sich quer zur Verstellrichtung des Tragelementes (200) erstreckt und von diesem (200) getragen wird, während das Langloch (321) in dem Schwingarm (300) vorgesehen ist.

7. Antriebsanordnung nach einem der Ansprüche 5 oder 6, dadurch gekennzeichnet, daß der Riegel (400) auf dem Tragelement (200) drehbeweglich um den Zapfen (430) angebracht ist.

8. Antriebsanordnung nach einem der Ansprüche 1 bis 7, dadurch gekennzeichnet, daß die Betätigungsorgane (500, 600) zur Verstellung von jeweils mit ihnen verbundenen Elektromagneten (160, 170) gesteuert werden.

9. Antriebsanordnung nach Anspruch 8, dadurch gekennzeichnet, daß die Betätigungsorgane Stößel (500, 600) sind, welche drehbar auf der Grundplatte (100) geführt sind.

10. Antriebsanordnung nach Anspruch 8, dadurch gekennzeichnet, daß die Betätigungsorgane Stößel (500, 600) sind, welche translatorisch bewegbar auf der Grundplatte (100) geführt sind.

11. Antriebsanordnung nach einem der Ansprüche 1 bis 10, dadurch gekennzeichnet, daß die Führungselemente einen in einer länglichen Ausnehmung (322) in Eingriff befindlichen Zapfen (112) aufweisen.

12. Antriebsanordnung nach Anspruch 11, dadurch gekennzeichnet, daß die längliche Ausnehmung (322) in dem Schwingarm (300) vorgesehen ist, während der Zapfen (112) auf der Grundplatte (100) vorgesehen ist.

13. Antriebsanordnung nach einem der Ansprüche 1 bis 12, dadurch gekennzeichnet, daß die Sperrorgane einen in eine Öffnung (324) eingreifenden Vorsprung (423) aufweisen, wobei die Öffnung eine quer zur Verstellrichtung des Schwingarms verlaufende Stützfläche (325) sowie einen parallel zu dieser Richtung ausgerichteten Kanal (326) festlegt.

14. Antriebsanordnung nach einem der Ansprüche 1 bis 13, dadurch gekennzeichnet, daß die Anschlagelemente einen Zapfen (430) aufweisen, welcher sich quer zur Verstellrichtung des Tragelementes (200) erstreckt, wobei der Zapfen (430) von diesem getragen wird und um diesen der Riegel (400) drehbeweglich angebracht ist, und ein Langloch (321), welches sich in dem Schwingarm (300) in dessen Verstellrichtung erstreckt, aufweist, während die Führungselemente einen in eine längliche Ausnehmung (322) eingreifenden Zapfen (112) umfassen, und daß die Amplitude der Durchfederung des Zapfens (430) in dem Langloch (321) in Verstellrichtung des Schwingarms annähernd gleich ist der Amplitude der Durchfederung des Zapfens (112) in der Ausnehmung (322) in der gleichen Richtung.

15. Antriebsanordnung nach einem der Ansprüche 1 bis 14, dadurch gekennzeichnet, daß sie ein Rückstellorgan (800) aufweist, welches den Riegel (400) in seine Sperrposition vorspannt.

**Claims**

1. Drive apparatus for driving an active member (S), such as a tachograph stylus, between a rest position and two working positions corresponding respectively to a main working position and to an auxiliary working position which is located between said rest position and said main working position, with priority being given to said main working position, said apparatus being characterized by the fact that it comprises:

a base (100),

an active member support part (200) guided in displacement over said base in a predetermined direction and resiliently urged (700) towards said rest position;

a rocker (300) mounted to move in translation parallel to the direction of displacement of said support part (200) and engaging said support part by abutment means (321, 430) which enable relative displacement between said support part and said rocker in said above-mentioned direction of displacement;

guide means (322, 112) suitable for guiding said rocker (300) in translation in said direction of displacement over a controlled amplitude;

a latch (400) rotatably mounted on said support part (200) about a secondary axis (430) extending transversely to the direction of displacement of said support part between a locking position in which stop means (325, 423) provided on the latch and the rocker prevent relative displacement therebetween in the direction of rocker displacement, and a release position in which the support part (200) is free to move relative to the rocker (300) over a stroke which is determined by said abutment means (430, 321),

a first actuator member (500) suitable for cooperating with said rocker (300) to displace it in translation over said controlled amplitude and to displace said support part (200) into said auxiliary working position; and

a second actuator member (600) suitable for cooperating with said latch (400) initially to displace the latch (400) by pivoting it from its locking position to its release position, and then by displacing said support part (200) relative to said rocker (300) over the stroke as determined by said abutment means (321, 430) in order to bring said support part (200) into its main working position.

2. Drive apparatus according to claim 1, characterized in that the support part (200) is a lever mounted to pivot relative to the base about a main axis (A) which is parallel to the secondary axis (430) of latch rotation.

3. Drive apparatus according to claim 1, characterized in that the support part (200) is guided over the base in translation.

4. Drive apparatus according to one of claims 1 to 3, characterized in that the actuator members (500, 600) comprise pushers suitable for coming into engagement with the rocker (300) and the latch (400) respectively.

5. Drive apparatus according to one of claims 1 to 4, characterized in that the abutment means (321, 430) provided to allow a relative displacement between the rocker (300) and the support part (200) comprise a pin (430) engaged in an oblong slot (321) whose long direction extends in the direction of rocker displacement.

6. Drive apparatus according to claim 5, wherein the pin (430) extends transversely to the direction of support part displacement and is mounted thereon, whereas the oblong slot (321) is provided in the rocker (300).

7. Drive apparatus according to one of claims 5 or 6 characterized in that the latch (400) is mounted to rotate relative to the support part (200) about the pin (430).

8. Drive apparatus according to one of claims 1 to 7 characterized in that the actuator members (500, 600) are caused to be displaced by respective electromagnets (160, 170) associated therewith.

9. Drive apparatus according to claim 8, wherein the actuator members are pushers (500, 600) guided to pivot relative to the base (100).

10. Drive apparatus according to claim 8, wherein the actuator members are pushers (500, 600) guided in translation relative to the base (100).

11. Drive apparatus according to one of claims 1 to 10, characterized in that the guide means include a peg (112) engaged in a oblong opening (322).

12. Drive apparatus according to claim 11, wherein the oblong opening (322) is provided on the rocker (300) whereas the peg (112) is provided on the base (100).

13. Drive apparatus according to one of claims 1 to 12, characterized in that the stop means comprise a projection (423) engaged in an opening (324) which defines a bearing surface (325) extending transversely to the direction rocker displacement together with a channel (326) which extends parallel to said direction.

14. Drive apparatus according to one of claims 1 to 13, characterized in that the abutment means comprise a pin (430) extending transversely to the direction of support part displacement, said pin being carried by said support part (200) and said latch (400) being rotatably mounted about said pin, together with an oblong slot (321) extending through the rocker (300) with its long direction extending in the rocker displacement direction, while said guide means comprise a peg (112) engaged in an oblong opening (322), and wherein the amplitude of pin displacement in the oblong slot (321) in the direction of rocker displacement is substantially equal to the amplitude of peg displacement in the opening (322) and in the same direction.

15. Drive apparatus according to one of claims 1 to 14, including return means (800) urging the latch (400) into its locking position.

FIG-1

321  323  320

310

325  300

322  327

326  324

FIG-2

430  420

410

411  412  421  422  423  400

FIG-3

300

321  332  323  320  322  342  341  327

330  340  325

333  331  343  324

310  326  328

FIG-4

420  423

430  421  422

410  412

400  411

1

FIG-5

FIG-6

0 184 509

FIG-7

FIG-8